(19)

Europäisches
Patentamt
European
Patent Office
Office européen
des brevets

(11) **EP 2 146 181 A2**

(12) **EUROPEAN PATENT APPLICATION**

(43) Date of publication:
**20.01.2010 Bulletin 2010/03**

(51) Int Cl.:
**G01B 9/02** $^{(2006.01)}$

(21) Application number: **09165179.4**

(22) Date of filing: **10.07.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.07.2008 JP 2008186967**

(71) Applicant: **Mitutoyo Corporation
Kawasaki-shi,
Kanagawa 213-8533 (JP)**

(72) Inventors:
• **Suzuki, Yoshimasa
Tsukuba-shi Ibaraki 305-0854 (JP)**
• **Ootao, Reiya
Tsukuba-shi Ibaraki 305-0854 (JP)**

(74) Representative: **Grünecker, Kinkeldey,
Stockmair & Schwanhäusser
Anwaltssozietät
Leopoldstrasse 4
80802 München (DE)**

(54) **Oblique Incidence Interferometer**

(57)     An oblique incidence interferometer 1 includes a light source 11 for emitting coherent light in an oblique direction to a measurement object W; a light collimating unit 12 for collimating the coherent light from the light source 11; a beam dividing unit 14 for dividing the collimated beam from the light collimating unit 12 into a measurement beam and a reference beam; a beam combining unit 15 for combining the measurement beam reflected by the measurement object W with the reference beam; and an image pickup device 17 for picking up images of interference fringes representing a surface shape of the measurement object, wherein the oblique incidence interferometer 1 includes measurement range expanding means 10 for enlarging a light measurement range on the measurement object W in a lateral direction of the measurement range.

FIG. 1

## Description

The present invention relates to an oblique incidence interferometer.

An oblique incidence interferometer according to the state of the art is disclosed in Japanese Unexamined Patent Application Publication No. 2008-32690.

Hitherto, there have been oblique incidence interferometers that measure a shape of a measurement objective surface by irradiating the measurement objective surface with coherent light in an oblique direction and analyzing interference fringes produced by interference between a measuring beam reflected from the measurement objective surface and a reference beam.

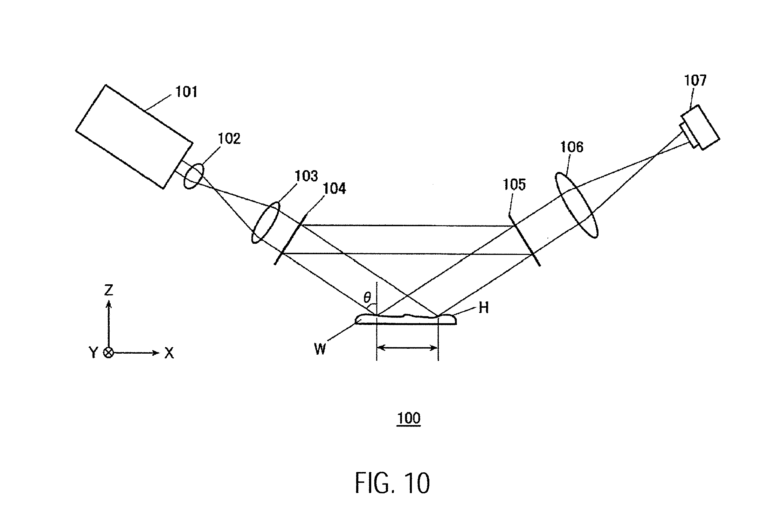

Fig. 10 is a schematic structural drawing of such an oblique incidence interferometer. As illustrated in Fig. 10, a oblique incidence interferometer 100 includes a light source 101, a lens 102, a collimate lens 103, a beam dividing element 104, a beam combining element 105, a lens 106, and an image pickup device 107.

A beam emitted from the light source 101 enters the beam dividing element 104 via the lens 102 and the collimator lens 103 to be divided into two beams. One of the divided beams is irradiated to the surface of measurement object W in an oblique direction. Then, the light reflected from the measurement object W is superimposed by the beam combining element 105 with the other beam divided by the beam dividing element 104. The superimposed beam is fed to the image pickup device 107 and images thereof are picked up by the image pickup device 107 as interference fringe images.

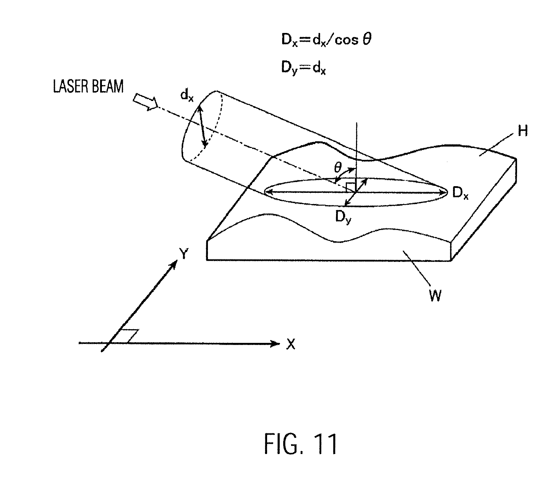

Fig. 11 is a drawing illustrating a measurement range of the oblique incidence interferometer 100. In Fig. 11, a condition is assumed wherein a laser beam (beam diameter: dx) is oblique incident on a measurement objective surface H of the measurement object W at an angle θ to a normal of the measurement objective surface H. In this case, the measurement range of the measurement objective surface H is an elliptic irradiation region that is enlarged 1/cos θ times in a longitudinal direction (X-direction in Fig. 11) of the measurement range. That is, in the measurement region (Dx, Dy), the following equations are satisfied; Dx = dx/cos θ, Dy = dx. Accordingly, the measurement range of the oblique incidence interferometer is enlarged in the longitudinal direction in accordance with the incident angle θ of the laser beam.

However, in the oblique incidence interferometer described above, the measurement region does not vary in a lateral direction (Y-direction in Fig. 11) even the incident angle θ changes. Hence, in order to also enlarge the measurement range in the lateral direction, for production of a collimated beam with a larger diameter, arrangement of a collimate lens with a large diameter is required by enlarging a distance from a light source, causing a problem in that a size of the apparatus increases.

It is an object of the present invention to provide a oblique incidence interferometer capable of enlarging a measurement range also in the lateral direction of the range without increasing a size of the apparatus.

An oblique incidence interferometer according to an aspect of the present invention comprises a light source configured to emit coherent light, and a light collimating unit configured to collimate light from the light source to form a collimated beam. A propagation direction of the collimated beam is oblique to an object plane. The interferometer further comprises a beam dividing unit, a beam combining unit and an image pickup device. The beam dividing unit is configured to divide the collimated beam into a measurement beam and a reference beam. The beam combining unit is configured to superimpose the measurement beam reflected by the measurement object with the reference beam. The image pickup device is configured to pick up images of interference fringes representing a surface shape of the measurement object. The oblique incidence interferometer further comprises measurement range enlarging means arranged between the light collimating unit and the beam dividing unit. The measurement range enlarging means is adapted to parallel shift temporally or spatially separated portions of the collimated beam in a lateral direction. The lateral direction is parallel to the object plane and perpendicular to the propagation direction of the collimated beam. The portions of the collimated beam are shifted to a different extent.

An oblique incidence interferometer according to another aspect of the present invention comprises a light source configured to emit coherent light, and a light collimating unit configured to collimate light from the light source to form a collimated beam. A propagation direction of the collimated beam is oblique to an object plane.

The interferometer further comprises a beam dividing unit, a beam combining unit and an image pickup device. The beam dividing unit is configured to divide the collimated beam into a measurement beam and a reference beam. The beam combining unit is configured to superimpose the measurement beam reflected by the measurement object with the reference beam. The image pickup device is configured to pick up images of interference fringes representing a surface shape of the measurement object. The oblique incidence interferometer comprises measurement range expanding means for enlarging a light measurement range on the measurement object in a lateral direction of the measurement range.

By providing the measurement range expanding means in the oblique incidence interferometers according to the aspects of the invention, wherein the measurement object is irradiated with light in an oblique direction, the beam measurement range on the measurement object can be expanded also in a lateral direction of the measurement range, so that the measurement range can be expanded without increasing a size of apparatus.

In some embodiments, the measurement range expanding means comprise an optical path shift member for moving parallel a proceeding direction of the coherent light by causing the coherent light from the light source to pass through the optical path shift member and a drive unit configured to rotate the optical path shift member. In some embodiments, the optical path shift member is a plane-parallel plate.

In some embodiments, the oblique incidence interferometer further comprises control means adapted to control the drive unit such that a predetermined periodic time of the rotation of the optical path shift member is provided. The control means is further adapted to control the image pickup unit such that an integration time of the image pickup unit is longer than the periodic time of the rotation of the optical path shift member.

In some embodiments, the drive unit is configured to rotatively reciprocate the optical path shift member by a predetermined angle.

In some embodiments, the drive unit is configured to continuously rotate the optical path shift member in one direction.

In some embodiments, the oblique incidence interferometer further comprises an angle detector adapted to produce a pulse signal per every rotation of the optical path shift member, and a control unit. The control unit is adapted to control the image pickup device such that images are picked up only at an instance of the rotation of the optical path shift member by a predetermined angle in synchronization with the pulse signal.

In some embodiments, the oblique incidence interferometer further comprises a shutter and a control unit for opening and closing the shutter according to the rotation angle of the optical path shift member.

In some embodiments, the oblique incidence interferometer further comprises an angle detector adapted to produce a pulse signal per every rotation of the optical path shift member. The control unit is adapted to open and close the shutter in synchronization with the pulse signal.

In some embodiments, the measurement range expanding means is a beam diameter enlarging member adapted to enlarge a diameter of the collimated beam passing through the beam diameter enlarging member only in the lateral direction.

In some embodiments, the beam diameter enlarging member is an anamorphic prism.

In some embodiments, the anamorphic prism comprises a pair of prisms and means for changing a magnification ratio of the anamorphic prism by changing an angular orientation of the prisms and/or a distance between the prisms.

In some embodiments, the light source comprises a laser.

In a method of oblique incidence interferometry according to the present invention, a light source adapted to emit coherent light is operated. The coherent light emitted by the light source is collimated to form a collimated beam. A propagation direction of the collimated beam is oblique to a measurement objective surface of a measurement object. The collimated beam is divided into a measurement beam and a reference beam. The measurement beam reflected by the measurement object is superimposed with the reference beam. Images of interference fringes representing a shape of the measurement objective surface are picked up. Before the collimated beam is divided into the reference beam and the measurement beam, temporally or spatially separated portions of the collimated beam are parallel shifted in a lateral direction. The lateral direction is parallel to the measurement objective surface and perpendicular to the propagation direction of the collimated beam. The portions of the collimated beam are shifted to a different extent.

Embodiments of the present invention will be described with respect to the accompanying drawings, wherein:

Fig. 1 is a schematic structural drawing of a oblique incidence interferometer according to a first embodiment;

Fig. 2 is a block diagram illustrating measurement range enlarging means 10 of the oblique incidence interferometer illustrated in Fig. 1;

Fig. 3 is an enlarged view of measurement range enlarging means according to the first embodiment;

Fig. 4 is a drawing illustrating a relationship between an optical path shift member of the oblique incidence interferometer illustrated in Fig. 1 and an irradiation region on a measurement object;

Fig. 5 is a drawing illustrating a state wherein light enters the optical path shift member at an incident angle $\theta$;

Fig. 6 is a graph illustrating relationships among thickness t, the incident angle $\theta$, and a shift amount S of the optical path shift member;

Fig. 7 is a drawing illustrating a relationship between the optical path shift member of a oblique incidence interferometer according to a second embodiment and the irradiation region on the measurement object;

Fig. 8 is a block diagram illustrating measurement range expanding means 20 of the oblique incidence interferometer illustrated in Fig. 7;

Fig. 9 is a drawing illustrating a relationship between a beam diameter enlarging member of a oblique incidence interferometer according to a third embodiment and the irradiation region on the measurement object;

Fig. 10 is a schematic structural drawing of a conventional oblique incidence interferometer; and

Fig. 11 is a drawing illustrating a measurement range of a oblique incidence interferometer.

Specific embodiments of an oblique incidence interferometer according to the present invention will be described below with reference to the drawings.

First Embodiment

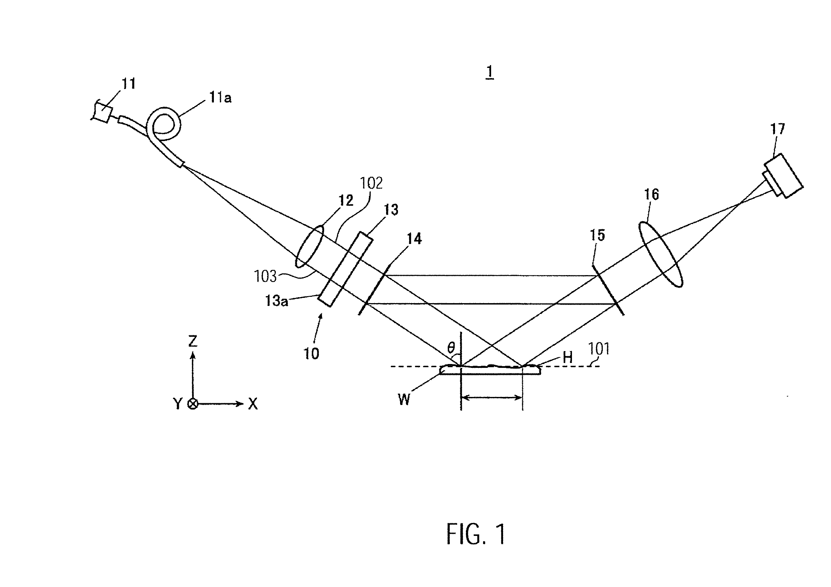

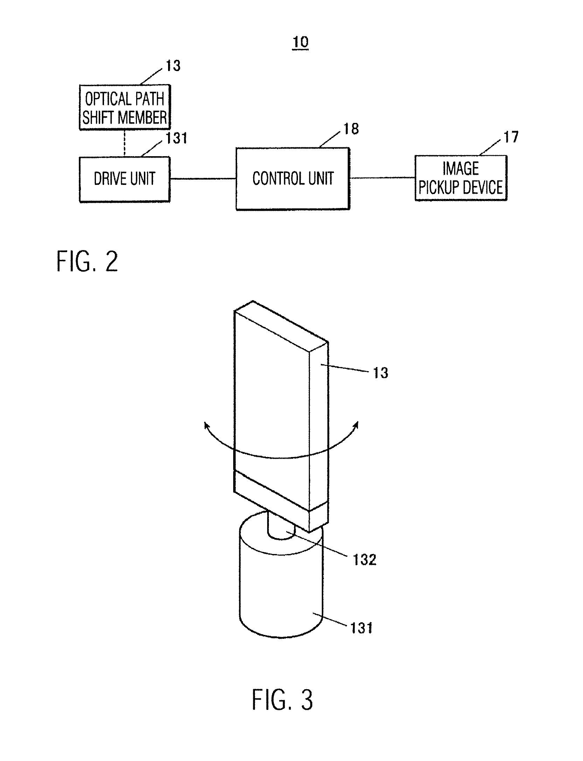

Fig. 1 is a schematic structural drawing of an oblique incidence interferometer 1 according to a first embodiment; Fig. 2 is a block diagram illustrating measurement range enlarging means 10 of the oblique incidence interferometer 1; and Fig. 3 is an enlarged view of an optical path shift member 13.

In the following description, in the oblique incidence interferometer 1, a substantially vertical direction to the measurement objective surface H of the measurement object W is assumed to be in a Z-direction and two directions perpendicular to the Z-direction are assumed to be in an X-direction and in a Y-direction.

As illustrated in Figs. 1 and 2, the oblique incidence interferometer 1 includes a light source 11, a light collimating unit 12, an optical path shift member 13, a beam dividing unit 14, a beam combining unit 15, a lens 16, an image pickup device 17, and a control unit 18.

The measurement objective surface H of the measurement object W can be aligned with an object plane 101 of the oblique incidence interferometer 1. The object plane 101 can be parallel to the X-direction and the Y-direction. The lens 16 can be configured such that light rays from points lying in the object plane 101 are focused at the image pickup device 17, such that a sharp image of an object located at the object plane 101 can be obtained by means of the image pickup device 17.

The location of the object plane 101 depends on optical properties of the lens 16 such as the focal length thereof, and on the relative arrangement of the lens 16 and the image pickup unit 17. In some embodiments, the lens 16 and the image pickup unit 17 can be arranged such that a bisector of an angle between the optical axis of the light collimating unit 12 and the optical axis of the lens 16 is a normal of the object plane 101.

The oblique incidence interferometer 1 can comprise means for holding the measurement object W and for aligning the measurement objective surface of the measurement object W with the object plane. For this purpose, a substrate holder (not shown) of a type known to persons skilled in the art can be employed. The oblique incidence interferometer 1 also includes measurement range enlarging means 10 for enlarging the light measurement range on the measurement object W in a lateral direction of the measurement range, and the measurement range enlarging means 10 includes the optical path shift member 13, a drive unit 131, the image pickup device 17, and the control unit 18, etc.

The light source 11 emits coherent light, such as laser, in an oblique direction to the measurement object W. The light source 11 may use a laser source outputting laser light, such as He-Ne laser, having favorable coherence.

The light emitted from the light source 11 is caused to expand with an N.A. of about 0.1 and enter the light collimating unit 12 via an optical fiber 11a.

The light collimating unit 12 is a collimator lens, for example, configured to collimate the coherent light from the light source 11 to have a larger beam diameter.

That is, the light emitted from the light source 11 is collimated by the light collimating unit 12 and then, enters the beam dividing unit 14 via the optical path shift member 13 (described later).

The beam dividing unit 14 is configured to divide the collimated beam or the incident parallel light that has passed through the optical path shift member 13 from the light collimating unit 12 into two beams. The beam dividing unit 14 may use a beam splitter or a diffraction grating, for example. With one beam of the two beams divided by the beam dividing unit 14, the measurement objective surface H of the measurement object W is irradiated. The beam is assumed to be a measurement beam. The measurement beam is reflected from the measurement objective surface H to enter the beam combining unit 15.

The other beam of the two beams divided by the beam dividing unit 14 enters the beam combining unit 15. The second beam is referred as a reference beam serving as a measurement reference.

The optical path shift member 13 is arranged in the optical path between the light collimating unit 12 and the beam dividing unit 14, and is formed of optical glass with parallel planes, for example, thus being a plane-parallel plate. The optical path shift member 13 includes a rotatable shaft 132 and a drive unit 131 for rotating the rotatable shaft 132 arranged at one end of the optical path shift member 13. The optical path shift member 13 reciprocates rotatively by a predetermined angle in synchronization with the rotation of the rotatable shaft 132.

Then, the parallel light incident in the optical path shift member 13 from the light collimating unit 12 is periodically refracted in the optical path by passing through the continuously rotatively reciprocating optical path shift member 13, so that the irradiation region of the measurement beam, with which the measurement object W is irradiated, is to be parallel shifted periodically in the lateral direction of the irradiation region by a shift amount S. That is, the optical path shift member 13 causes coherent light from the light source 11 to pass therethrough to parallel shift the proceeding direction of the coherent light.

Due to the reciprocating rotative motion of the optical path shift member 13, the extent to which the propagation direction of light of the collimated beam is shifted by the optical path shift member 13 relative to its original propagation direction depends on the point of time at which the light passes through the optical path shift member 13.

Thus, temporally separated portions of the collimated beam from the collimating unit 12 are parallel shifted to a different extent by the optical path shift member. The temporally separated portions of the collimated beam pass through the optical path shift member 13 at different points of time. The optical path of the temporally separated portions of the collimated beam before entering the optical path shift member 13 can be substantially the same, since the arrangement of the light source 11, the optical fiber 11 and the light collimating unit 12 can be fixed while a measurement is performed. For portions of the collimated beam from the light collimating unit 12 that are spatially separated, but not temporally separated (for example, for a first portion of the collimated beam propagating along the line 102 and a second portion of the collimated beam propagating along the line 103, wherein the first and the second portion pass through the optical path shift member 13 at substantially the same point of time), the extent to which their propagation direction is parallel shifted in the lateral direction can be substantially the same.

The drive unit 131 may be a galvanometer or a motor, for example, and is driven based on a control signal from the control unit 18 to rotatively reciprocate the optical path shift member 13 by a predetermined angle.

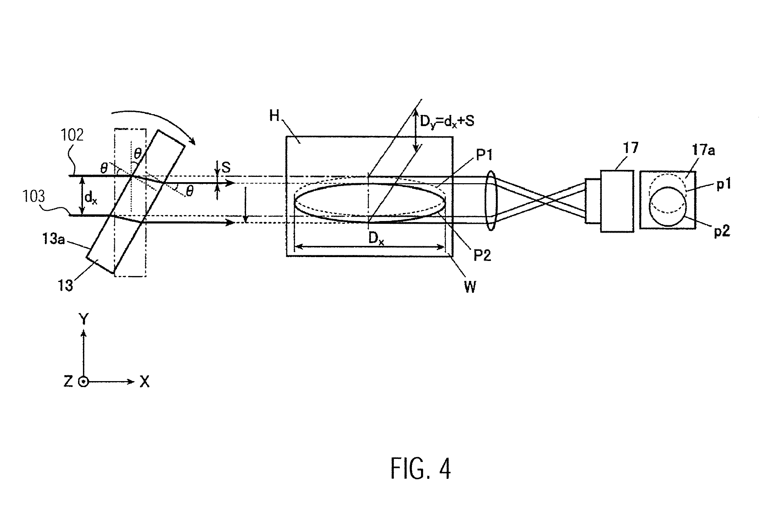

Fig. 4 is a drawing illustrating a relationship between the optical path shift member 13 and the irradiation region on the measurement object W. In Fig. 4, the beam dividing unit 14 and the beam combining unit 15 are omitted.

As illustrated in Fig. 4, when the light (beam diameter: dx) from the light collimating unit 12 enters an incidence plane 13a of the optical path shift member 13 at an incident angle of 0°, the light proceeds straight to be divided by the beam dividing unit 14; the measurement object W is irradiated at a position P1 on the measurement object W with the measurement beam; and the images are picked up as interference fringe images at a position p1 on an imaging plane 17a of the image pickup device 17.

On the other hand, when the optical path shift member 13 is rotated by an angle of θ° so that the light from the light collimating unit 12 enters the incidence plane 13a at an incident angle θ°, the light is refracted during entering the optical path shift member 13 and during being emitted therefrom to move parallel in Y-direction by a shift amount S.

The Y-direction is substantially parallel to the object plane 101 and the measurement objective surface H of the measurement object W. Moreover, since the propagation direction of the collimated beam from the light collimating unit 12 is within a plane parallel to the X-direction and the Z-direction, the Y-direction is substantially perpendicular to the propagation direction of the collimated beam. Hence, by parallel shifting the propagation direction of the collimated beam in the Y-direction, the collimated beam is shifted into a lateral direction parallel to the object plane 101 and perpendicular to the propagation direction of the collimated beam.

The light emitted from the optical path shift member 13 by moving parallel is divided by the beam dividing unit 14, and the measurement object W is irradiated with the measurement beam at a position P2 on the measurement object W, so that the images thereof are picked up as interference fringe images at a position p2 on the imaging plane 17a of the image pickup device 17. A method for calculating the shift amount S will herein be described in detail.

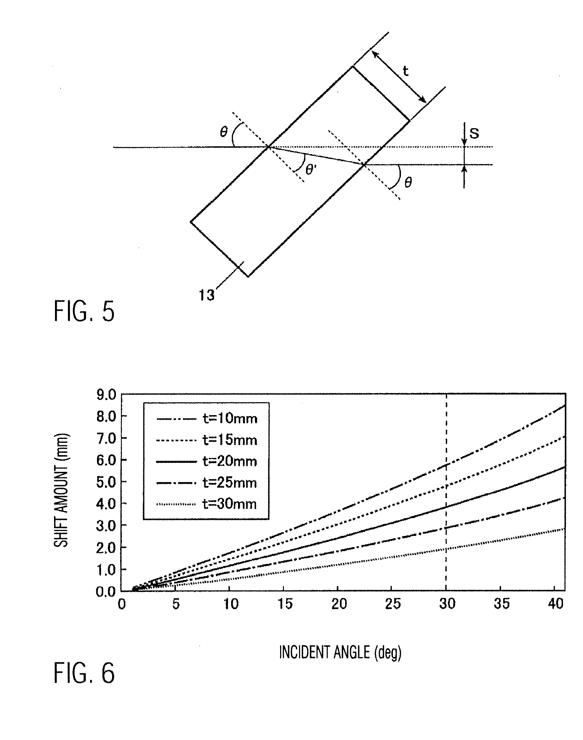

Fig. 5 is a drawing illustrating a state wherein light enters the optical path shift member 13 at an incident angle θ, where the refractive index of the optical path shift member 13 is denoted as n and thickness thereof is denoted as t.

As illustrated in Fig. 5, the rule sin θ = n sin θ' (Snell's law) holds between the light incident in the optical path shift member 13 and the transmitted light that has passed through the optical path shift member 13. Accordingly, the transmitted light is displaced in parallel from the incident light by the shift amount S expressed by a following equation (1).

$$S = t \sin\theta \left( 1 - \frac{\cos\theta}{\sqrt{n^2 - \sin^2\theta}} \right) \qquad (1)$$

Fig. 6 is a graph illustrating a relationship between the thickness t, the incident angle θ, and the shift amount S of the optical path shift member 13. In Fig. 6, the shift amount (mm) is plotted in ordinates and the incident angle (deg) in abscissa. Upon measuring data of Fig. 6, the refractive index n = 1.5 is used which is for general glass. Also, the light cannot enter the optical path shift member 13 at an angle of over 41 ° because of a critical angle during emission.

It is understood from Fig. 6 that with increasing incident angle θ, the shift amount S is increased. Also, when the incident angle θ is identical, it is understood that with increasing thickness t, the shift amount S increases.

For example, when the incident angle θ is 30°, the shift amount S is about 1.9 mm at t = 10 mm; about 3.8 mm at t = 20 mm; and about 5.8 mm at t = 30 mm.

At other angles, with increasing thickness t, the shift amount S increases, in the same way.

The beam combining unit 15 superimposes the measurement beam reflected from the measurement objective surface H with the reference beam. The beam combining unit 15 is formed of a beam splitter, for example, in the same way as the beam dividing unit 14, to form interference fringes by superimposing the measurement beam with the reference beam.

The interference fringes formed by the beam combining unit 15 are focused by the lens 16, so that the images of the interference fringes representing the surface shape of the measurement object W are picked up by the image pickup device 17.

Specifically, the image pickup device 17 receives images of the interference fringes on the irradiation region, which continuously moves parallel. An integration time of the image pickup device 17 can be longer than a periodic time of the moving cycle of the optical path shift member 13.

The control unit 18 includes a CPU (central processing unit), an ROM (read only memory), and an RAM (random access memory) (any on of these is not shown), etc. The control unit 18, as illustrated in Fig. 2, is connected to the drive unit 131 and the image pickup device 17, etc.

The ROM of the control unit 18 stores a control program for controlling the drive unit 131 and the image pickup device 17 and various processing programs, and the CPU exercises control over operations of the drive unit 131 and the image pickup device 17 in cooperation with the control program and various processing programs.

For example, the control unit 18 functions as control means for continuously moving the irradiation region on the measurement object W in parallel in the lateral direction of the irradiation region by rotating the optical path shift member 13, so that the image pickup device 17 integrally receives images of the interference fringes on the irradiation region, which continuously moves parallel, for a period longer than the moving cycle of the optical path shift member 13.

Specifically, the control unit 18 rotatively reciprocates the optical path shift member 13 by a predetermined angle at a high speed by driving the drive unit 131.

The control unit 18 also causes the image pickup device 17 to receive images of the interference fringes, which moves on the image pickup device 17 at high speed to follow the reciprocation of the irradiation range on the measurement object W. The integration time of the image pickup device 17 can be adequately longer than the periodic time of the moving cycle based on a moving frequency (fHz). For example, when the interference fringes reciprocate at a frequency of 1 kHz, the image pickup device 17 integrally receives images for a period of about over ten times the inverse of the frequency (0.01 sec).

The control unit 18 also executes computing processing to determine the surface shape of the measurement object W based on the interference fringe images obtained by receiving the images with the image pickup device 17.

An analyzing method for numerically analyzing the obtained interference fringes may include a Fourier analysis method and a phase shift method.

Then, the function of the oblique incidence interferometer 1 configured in such a manner will be described.

The light emitted from the light source 11 is periodically refracted in accordance with rotation of the optical path shift member 13 by passing through the continuously rotating optical path shift member 13, so that from the optical path shift member 13, light with an optical path having been periodically moved by the shift amount S is emitted.

The light with an optical path having been periodically moved by the shift amount S impinges on the measurement objective surface H of the measurement object W, so that the irradiation region is also moved parallel continuously. That is, the irradiation region reciprocates in parallel in the lateral direction.

Accordingly, on the imaging plane 17a of the image pickup device 17, the interference fringes moving at high speed emerge to follow the reciprocation of the irradiation range on the measurement object W and these interference fringe images are integrally received by the image pickup device 17.

As described above, according to the oblique incidence interferometer 1 of the embodiment, by reciprocating parallel the irradiation region on the measurement object W of the measurement beam in the lateral direction to cause the image pickup device 17 to integrally receive images of the interference fringes moving on the image pickup device 17 at high speed to follow the reciprocation of the irradiation range, the beam measurement range (Dx, Dy) on the measurement object W becomes $Dx = dx/\cos\theta$, $Dy = dx + S$, so that the measurement range is artificially enlarged. Hence, without expanding the apparatus in size, the measurement range can be enlarged.

Also, by providing the optical path shift member 13 between the light collimating unit 12 and the beam dividing unit 14, the beam measurement range on the measurement object W can be enlarged also in the lateral direction of the measurement range while maintaining a distance between the light source 11 and the light collimating unit 12, so that the measurement range can be enlarged without increasing a size of the apparatus.

Second Embodiment

Then, a second embodiment of the present invention will be described mainly on points different from the first embodiment. Like reference numerals designate like components common to the first embodiment and the description thereof is omitted.

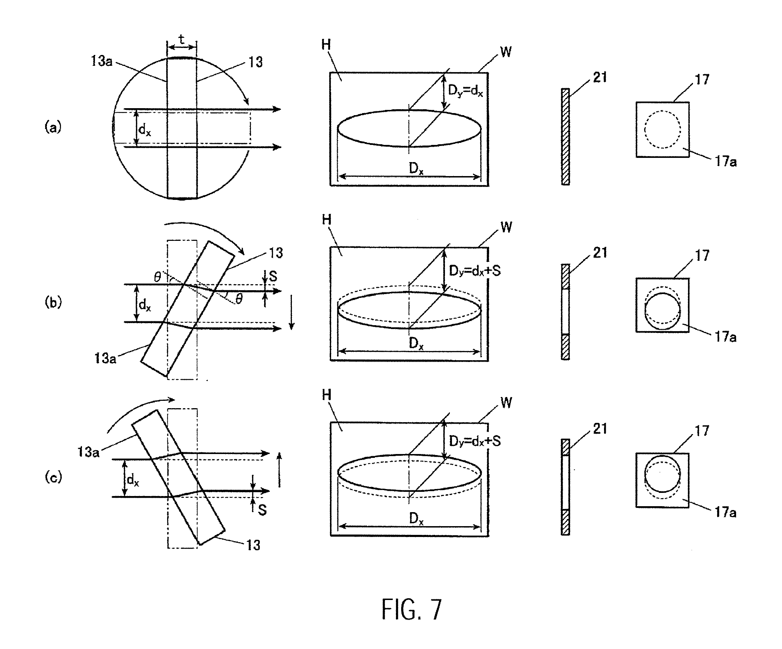

Fig. 7 is a drawing illustrating a relationship between the optical path shift member 13 of an oblique incidence interferometer 2 according the second embodiment and the irradiation region on the measurement object W. In Fig. 7, the beam dividing unit 14 and the beam combining unit 15 are omitted.

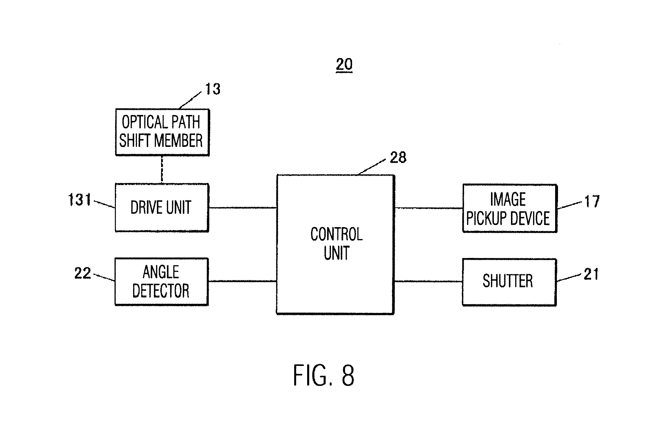

Also, Fig. 8 is a block diagram illustrating measurement range expanding means 20 of the oblique incidence interferometer 2.

The measurement range expanding means 20 of the oblique incidence interferometer 2 includes the optical path shift member 13, the drive unit 131, the image pickup device 17, a shutter 21, an angle detector 22, and a control unit 28.

The shutter 21 is arranged on an optical axis directly in front of the image pickup device 17 and is opened/closed in accordance with the angle of rotation of the optical path shift member 13.

The angle detector 22 is formed of an encoder, for example, to produce a pulse signal per every rotation of the optical path shift member 13 by a predetermined angle.

The control unit 28 drives a rotation shaft 132 by controlling the drive unit 131 to rotate the optical path shift member 13 in one direction at predetermined high speed.

Also, the control unit 28 opens/closes the shutter 21 in synchronization with the pulse signal produced by the angle detector 22 to cause the image pickup device 17 to integrally and selectively receive images of the interference fringes of the irradiation region continuously moving parallel.

Specifically, while the light (beam diameter: dx) from the light collimating unit 12 enters the incidence plane 13a of the optical path shift member 13 at an incident angle within a predetermined range of 0° to θ° to move parallel, the control unit 28 opens the shutter 21 (see Fig. 7(b) (c)).

On the other hand, while the light from the light collimating unit 12 enters the incidence plane 13a of the optical path shift member 13 at an incident angle out of the predetermined range, the control unit 28 closes the shutter 21 (see Fig. 7(a)).

The control unit 28 may also cause the image pickup device 17 to pick up images of the interference fringes of the irradiation region only at an instance of the rotation of the optical path shift member 13 by a predetermined angle in synchronization with the pulse signal produced by the angle detector 22.

As described above, according to the oblique incidence interferometer 2 of the embodiment, since the irradiation region on the measurement object W can be moved in parallel in both positive and negative directions, the measurement range (Dx, Dy) satisfies equations of $Dx = dx/\cos\theta$, $Dy = dx + 2S$, so that the measurement range is more enlarged in the lateral direction.

Also, by receiving no image unless the optical path shift member 13 moves parallel due to a position of the optical path shift member 13, contrast of the interference fringes can be improved.

Also, since the rotation direction is one way, a mechanism is simplified to rotate at high speed.

Third Embodiment

Then, a third embodiment of the present invention will be described mainly on points different from the first embodiment. Like reference numerals designate like components common to the first embodiment and the description thereof is omitted.

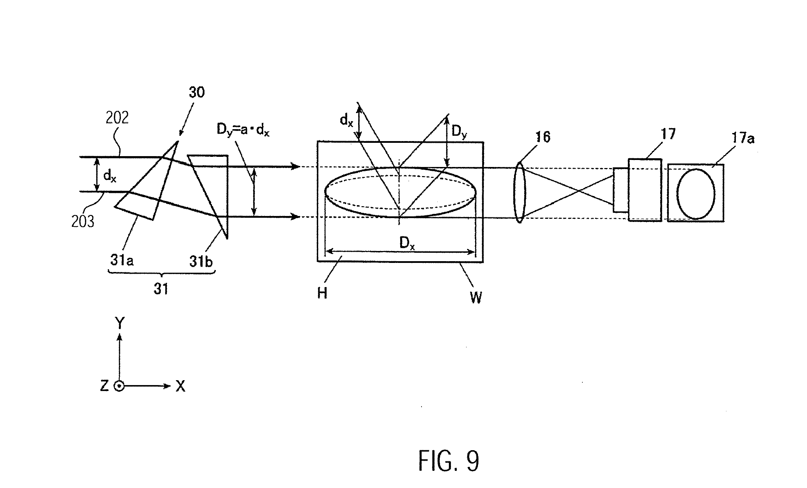

Fig. 9 is a drawing illustrating a relationship between a beam diameter enlarging member 31 of an oblique incidence interferometer 3 and an irradiation region on the measurement object W. In Fig. 9, the beam dividing unit 14 and the beam combining unit 15 are omitted.

Measurement range enlarging means 30 of the oblique incidence interferometer 3 is the beam diameter enlarging member 31 wherein coherent light from the light source 11 is caused to pass through the beam diameter enlarging member 31 to enlarge the diameter of the coherent light only in one direction. The direction into which the beam diameter is enlarged can be a lateral direction parallel to the object plane 101 and perpendicular to the propagation direction of the collimated beam, such as the Y-direction.

The beam diameter enlarging member 31 may use an anamorphic prism, for example.

Specifically, the anamorphic prism includes a pair of prisms 31a and 31b, and is an optical element configured to emit a beam in a direction parallel to an incident beam after a magnification ratio of the outgoing beam to the incident beam is changed in a specific direction of the beam cross-section (i.e., compression or elongation). Hence, the anamorphic prism can cause a collimated beam with an optional diameter to pass through the anamorphic prism after only one direction of the beam is enlarged while the beam direction perpendicular to one direction is maintained as it is.

Also, the anamorphic prism is configured to change the magnification ratio a by about two to four times by changing angles and a distance between the two prisms 31a and 31b.

Due to the enlargement of the beam diameter by the beam enlarging member, spatially separated portions of the collimated beam from the light collimating unit 12 are parallel shifted in the lateral direction to a different extent. For example, a propagation direction of light propagating along the line 202 in Fig. 9 is parallel shifted into the negative Y-direction to a smaller extent that light propagating along the line 203. However, a propagation direction of portions of the collimated beam which are temporally separated but not spatially separated (for example, light propagating along the line 202 and emitted from the light source 11 at different points of time) can be parallel shifted into the negative Y-direction to substantially the same extent, since the arrangement of the beam enlarging member 31 can be substantially fixed during the duration of a measurement.

As described above, according to the oblique incidence interferometer 3 of the embodiment, only the beam direction perpendicular to a plane of incidence is enlarged for irradiating the measurement object W therewith by causing a beam to pass through the beam diameter enlarging member 31, so that the same advantage as the advantages of the first and second embodiments can be obtained. Also, it is not necessary to cause the optical component to be driven to simplify the configuration.

The embodiments of the present invention have been described as above; however, the invention is not limited to the embodiments, so that various modifications, additions, and substitutions can be made within the scope of the invention.

The measurement range enlarging means of the present invention may also be incorporated in a Mach-Zehnder oblique incidence interferometer, for example.

According to an embodiment, an oblique incidence interferometer includes a light source configured to emit coherent light in an oblique direction to a measurement object; a light collimating unit configured to collimate the coherent light from the light source; a beam dividing unit configured to divide the collimated beam from the light collimating unit into a measurement beam and a reference beam; a beam combining unit configured to combine the measurement beam reflected by the measurement object with the reference beam; and an image pickup device configured to pick up images of interference fringes representing a surface shape of the measurement object, wherein the oblique incidence interferometer includes measurement range expanding means for enlarging a light measurement range on the measurement object in a lateral direction of the measurement range.

According to a further embodiment of the invention, in the oblique incidence interferometer according to the preceding paragraph, the measurement range expanding means includes an optical path shift member arranged between the light collimating unit and the beam dividing unit for moving parallel a proceeding direction of the coherent light by causing the coherent light from the light source to pass through the optical path shift member; a drive unit configured to rotate the optical path shift member; and controlling means for causing the image pickup device to integrally receive images of interference fringes of an irradiation region, which continuously moves parallel, for a period of time longer than a moving cycle of the optical path shift member by continuously rotating the optical path shift member to continuously move parallel the irradiation region on the measurement object in a lateral direction of the irradiation region.

According to a further embodiment the invention, in the oblique incidence interferometer according to the preceding paragraph, the drive unit is configured to rotatively reciprocate the optical path shift member by a predetermined angle.

According to a further embodiment of the invention, in the oblique incidence interferometer described two paragraphs above, the drive unit is configured to continuously rotate the optical path shift member in one direction.

According a further embodiment of the invention, the oblique incidence interferometer according to the preceding paragraph further includes a shutter configured to be opened/closed according to the rotation angle of the optical path shift member, wherein the controlling means is configured to cause the image pickup device to selectively and integrally receive images of the interference fringes of the irradiation region, which continuously moves parallel, by controlling the opening/closing of the shutter.

According to a further embodiment of the invention, in the oblique incidence interferometer described five paragraphs above, the measurement range expanding means is a beam diameter enlarging member, which is arranged between the light collimating unit and the beam dividing unit, and causes the coherent light from the light source to pass through the beam diameter enlarging member to enlarge a diameter of the coherent light only in one direction.

According to a further embodiment of the invention, in the oblique incidence interferometer according to the preceding paragraph, the beam diameter enlarging member is an anamorphic prism.

Reference Numerals

1, 2, 3: oblique incidence interferometer
10, 20, 30: measurement range expanding means
11: light source
12: light collimating unit
13: optical path shift member
13a: incidence plane
131: drive unit
132: rotatable shaft
14: beam dividing unit
15: beam combining unit
16: lens
17: image pickup device
18, 28: control unit
21: shutter
22: angle detector
31: beam diameter enlarging member
31a, 31b: prism
W: measurement object
101: object plane
102, 103, 202, 203: optical path of beam portions

**Claims**

1. An oblique incidence interferometer (1, 2, 3) comprising:

    a light source (11) configured to emit coherent light;
    a light collimating unit (12) configured to collimate the coherent light from the light source (11) to form a collimated beam, a propagation direction of said collimated beam being oblique to an object plane (101);
    means for holding a measurement object (W) such that a measurement objective surface (H) of said measurement object (W) is aligned with said object plane (101);

a beam dividing unit (14) configured to divide the collimated beam into a measurement beam and a reference beam;

a beam combining unit (15) configured to superimpose the measurement beam reflected by the measurement object (W) with the reference beam; and

an image pickup device (17) configured to pick up images of interference fringes representing a surface shape of the measurement object (W); **characterized in that**

the oblique incidence interferometer (1, 2, 3) comprises measurement range enlarging means (10, 20, 30) arranged between said light collimating unit (12) and said beam dividing unit (14), said measurement range enlarging means (10, 20, 30) being adapted to parallel shift temporally or spatially separated portions of said collimated beam in a lateral direction, said lateral direction being parallel to said object plane (101) and perpendicular to said propagation direction of said collimated beam, wherein said portions of said collimated beam are shifted to a different extent.

2. An oblique incidence interferometer (1, 2, 3) comprising:

a light source (11) configured to emit coherent light;

a light collimating unit (12) configured to collimate the coherent light from the light source (11) to form a collimated beam, a propagation direction of said collimated beam being oblique to an object plane (101);

means for holding a measurement object (W) such that a surface (H) of said measurement object (W) is aligned with said object plane (101);

a beam dividing unit (14) configured to divide the collimated beam into a measurement beam and a reference beam;

a beam combining unit (15) configured to superimpose the measurement beam reflected by the measurement object (W) with the reference beam; and

an image pickup device (17) configured to pick up images of interference fringes representing a surface shape of the measurement object (W), **characterized in that**

the oblique incidence interferometer (1, 2, 3) comprises measurement range expanding means (10, 20, 30) for enlarging a light measurement range on the measurement object (W) in a lateral direction of the measurement range.

3. The oblique incidence interferometer (1, 2) according to Claim 1 or 2, wherein the measurement range expanding means (10, 20) comprises:

an optical path shift member (13) for moving parallel a proceeding direction of the coherent light by causing the coherent light from the light source to pass through the optical path shift member (13); and

a drive unit (131) configured to rotate the optical path shift member (13).

4. The oblique incidence interferometer (1, 2) according to claim 3, wherein said optical path shift member (13) is a plane parallel plate.

5. The oblique incidence interferometer (1, 2) according to claim 3 or 4, further comprising a control unit (18, 28) adapted to control said drive unit (131) such that a predetermined periodic time of said rotation of said optical path shift member (13) is provided, said control unit (18, 28) further being adapted to control said image pickup device (17) such that an integration time of said image pickup device (17) is longer than said periodic time of said rotation of said optical path shift member (13).

6. The oblique incidence interferometer (1) according to any of Claims 3 to 5, wherein the drive unit (131) is configured to rotatively reciprocate the optical path shift member (13) by a predetermined angle.

7. The oblique incidence interferometer (2) according to any of Claims 3 to 5, wherein the drive unit (131) is configured to continuously rotate the optical path shift member (13) in one direction.

8. The oblique incidence interferometer (2) according to claim 7, further comprising an angle detector (22) adapted to produce a pulse signal per every rotation of said optical path shift member (13) and a control unit (28) adapted to control said image pickup device (17) such that images are picked up only at an instance of the rotation of the optical path shift member (13) by a predetermined angle in synchronization with the pulse signal.

9. The oblique incidence interferometer (2) according to Claim 7, further comprising a shutter (21) and a control unit (28) for opening and closing said shutter (21) in accordance with the rotation angle of the optical path shift member (13).

10. The oblique incidence interferometer (2) according to claim 9, further comprising an angle detector (22) adapted to produce a pulse signal per every rotation of said optical path shift member (13), and wherein said control unit (28) is adapted to open and close said shutter (21) in synchronization with said pulse signal.

11. The oblique incidence interferometer (3) according to Claim 1 or 2, wherein the measurement range expanding means (30) is a beam diameter enlarging member (31)adapted to enlarge a diameter of said collimated beam passing through the beam diameter enlarging member (31) only in said lateral direction.

12. The oblique incidence interferometer (3) according to Claim 11, wherein the beam diameter enlarging member (31) is an anamorphic prism.

13. The oblique incidence interferometer (3) according to claim 12, wherein the anamorphic prism comprises a pair of prisms (31a, 31b) and means for changing a magnification ratio of said anamorphic prism by changing an angular orientation of said prisms (31a, 31b) and/or a distance between said prisms (31a, 31b).

14. The oblique incidence interferometer (1, 2, 3) according to any of claims 1 to 13, wherein said light source (11)comprises a laser.

15. A method of oblique incidence interferometry, comprising:

operating a light source (11) adapted to emit coherent light;
collimating the coherent light emitted by the light source (11) to form a collimated beam, a propagation direction of the collimated beam being oblique to a measurement objective surface (H) of a measurement object (W);
dividing the collimated beam into a measurement beam and a reference beam;
superimposing the measurement beam reflected by the measurement object with the reference beam; and
picking up images of interference fringes representing a shape of the measurement objective surface;
**characterized in that**
before the collimated beam is divided into the reference beam and the measurement beam, temporally or spatially separated portions of the collimated beam are parallel shifted in a lateral direction, the lateral direction being parallel to the measurement objective surface (H) and perpendicular to the propagation direction of the collimated beam, wherein the portions of the collimated beam are shifted to a different extent.

FIG. 1

FIG. 2

FIG. 3

FIG. 4

FIG. 5

FIG. 6

FIG. 7

20

13

OPTICAL PATH
SHIFT MEMBER

28

131 DRIVE UNIT

IMAGE
PICKUP DEVICE 17

CONTROL
UNIT

22 ANGLE
DETECTOR

SHUTTER 21

FIG. 8

FIG. 9

EP 2 146 181 A2

100

FIG. 10

$$D_x = d_x / \cos \theta$$
$$D_y = d_x$$

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008032690 A